# EUROPÄISCHE PATENTSCHRIFT

(11) **EP 2 915 304 B1**
(45) Veröffentlichungstag und Bekanntmachung des Hinweises auf die Patenterteilung: **05.06.2019**
(21) Anmeldenummer: 13779549.8
(22) Anmeldetag: 15.10.2013
(51) Int. Cl.: H04L 29/08, H04L 29/06, G06F 17/30

(54) **VERFAHREN UND SYSTEM ZUM ZUGREIFEN AUF DATEN IN EINEM VERTEILTEN NETZWERKSYSTEM**
METHOD AND SYSTEM FOR ACCESSING DATA IN A DISTRIBUTED NETWORK SYSTEM
PROCÉDÉ ET SYSTÈME D'ACCÈS À DES DONNÉES DANS UN SYSTÈME DE RÉSEAU DISTRIBUÉ

(30) Priorität: 05.11.2012 DE 102012110544
(43) Veröffentlichungstag der Anmeldung: 09.09.2015
(73) Patentinhaber: OMS Software GmbH, 82433 Bad Kohlgrub (DE)
(72) Erfinder: KRAMER, Christian, 81243 München (DE)
(74) Vertreter: 2s-ip Schramm Schneider Bertagnoll Patent- und Rechtsanwälte Part mbB
(86) Internationale Anmeldenummer: PCT/EP2013/071565
(87) Internationale Veröffentlichungsnummer: WO 2014/067776

(56) Entgegenhaltungen:
- US-A1- 2004 148 409
- US-A1- 2007 005 774
- US-A1- 2009 247 134
- US-A1- 2011 277 026

## Beschreibung

### Gebiet der Erfindung

Die Erfindung betrifft ein Verfahren zum Zugreifen auf Daten durch eine Clienteinrichtung in einem verteilten Netzwerksystem, wobei die Daten dezentral auf unterschiedlichen Servereinrichtungen gespeichert sind. Des Weiteren betrifft die Erfindung ein System zum Zugreifen auf Daten durch eine Clienteinrichtung, wobei das System angepasst ist, das erfindungsgemäße Verfahren auszuführen.

### Stand der Technik und Hintergrund der Erfindung

Es ist bekannt, Daten auf unterschiedlichen Servereinrichtungen dezentral zu speichern und einer Anzahl von Benutzern (Usern) Zugriff auf die dezentral gespeicherten Daten zu gewähren. Üblicherweise greifen die User über eine Clienteinrichtung auf die in den Servereinrichtungen gespeicherten Daten zu. In einem unternehmensinternen Computernetzwerk, welches eine Anzahl von Servereinrichtungen umfassen kann, werden den Usern Zugriffberechtigungen eingeräumt, welche es den Usern ermöglichen, auf die in den Servereinrichtungen gespeicherten Daten zuzugreifen. Diese Art des Zugriffes auf die Daten bzw. der Einrichtung der entsprechenden Zugriffsberechtigungen ist allerdings nur dann praktikabel, solange die Clienteinrichtung, über die ein User auf die Daten zugreift, Bestandteil des unternehmensinternen Computernetzwerkes ist.

Wünschenswert ist es, einem User Zugriff auf Daten zu gewähren, die in Servereinrichtungen gespeichert sind, die zu verschiedenen Computernetzwerken, etwa von verschiedenen Unternehmen gehören.

Um dies zu erreichen, ist es im Stand der Technik notwendig, dass jedes Unternehmen für einen externen User die entsprechenden Zugriffsberechtigungen einräumen muss und dem User entsprechende Zugangsdaten, etwa Login und Passwort zur Verfügung stellen muss. Ein User kann sich dann in ein Computernetzwerk eines Unternehmens einloggen und nach einem erfolgreichen Login auf Daten zugreifen, für die der User die erforderliche Zugriffsberechtigung hat.

Für den Zugriff auf Daten eines anderen Unternehmens ist es allerdings erforderlich, dass sich der User auch in das Computernetzwerk des anderen Unternehmens einloggt. Im Stand der Technik ist es also notwendig, dass sich ein User, wenn er auf Computernetzwerke unterschiedlicher Unternehmen zugreifen will, an jedem Computernetzwerk einzeln einloggt. Diese Vorgehensweise ist für den User einerseits umständlich, weil er sich in jedes Computernetzwerk getrennt einloggen bzw. anmelden muss. Andererseits werden dem User für jedes Computernetzwerk eigene Zugangsdaten zur Verfügung gestellt, was beim Nutzer einen erhöhten Aufwand für die Verwaltung der Zugangsdaten erfordert. Zudem muss der User gewährleisten, dass die Zugangsdaten zu den unterschiedlichen Computernetzwerken sicher verwahrt werden, um einen Missbrauch zu vermeiden.

Ein weiterer Nachteil besteht darin, dass ein User, wenn er sich in Computernetzwerke verschiedener Unternehmen eingeloggt hat, zwar auf die Daten in den jeweiligen Computernetzwerken zugreifen kann. Allerdings kann er jeweils nur die Daten eines einzelnen Unternehmens einsehen. Eine vereinheitlichte Sicht auf sämtliche Daten aller Unternehmen, in die sich ein User eingeloggt hat, ist dabei allerdings nicht möglich.

Die US 2012/0150843 A1 versucht dieses Problem zu lösen. Die US 2012/0150843 A1 lehrt ein Verfahren, bei dem ein User sich an mehreren Netzwerken anmelden kann, um auf Daten dieser Netzwerke zugreifen zu können. Dabei wird von einem ID-Association-Server für einen User eine Domain-übergreifende (bzw. Server-übergreifende) Kennung erzeugt, die einer oder mehreren User-spezifischen Kennungen zugeordnet wird. Mit den User-spezifischen Kennungen kann sich ein User an einem bestimmten Netzwerk anmelden. Sicherheitsrelevante Daten des Users (z.B. Kreditkarteninformation) werden vom ID-Association-Server verwaltet, sodass diese Daten nicht vom Netzwerk selbst verwaltet werden müssen bzw. können. Damit soll gewährleistet werden, dass mehrere Netzwerke Daten (z.B. Transaktionsdaten) eines Users untereinander austauschen können, ohne dass die sicherheitsrelevanten Daten ausgetauscht werden können.

Damit wird aber nicht das Problem gelöst, dass ein User sich an mehreren Netzwerk getrennt anmelden muss, wenn er gleichzeitig oder parallel auf mehrerer Netzwerke zugreifen möchte. Er muss sich an jedem Netzwerk getrennt und einzeln anmelden. Ebenfalls wird dadurch nicht das Problem gelöst, dass dem User eine vereinheitlichte Sicht auf die Daten aus unterschiedlichen Netzwerk ermöglicht wird. Die Daten eines Netzwerkes müssen getrennt von den Daten eines anderen Netzwerkes angefragt werden und werden auch unabhängig voneinander dem User zur Verfügung gestellt.

US 2011/277026 A1 zeigt eine einzige Authentifizierungsdomäne für verteilte Server.

Ein Anwendungen-Controller ist ein Vermittler zwischen einer Vielzahl von Clients und Anwendungen. Der Controller bietet einem Benutzer eine einzige Anmeldung. Der Benutzer meldet sich beim Controller an, der den Benutzer gemäß bestimmte Regel und dem Host der Anwendung für die Anwendung authentifiziert. Der Benutzer meldet sich nur einmal an, um Zugriff auf eine Vielzahl von unterschiedlich Anwendungen zu erhalten.

Die US 2007/005774 zeigt ein Gateway, das das Umschalten von Transaktionen auf Anwendungsebene ermöglicht. Das Gateway leitet die Transaktion basierend auf dem Inhalt der Anwendungsebene, dem aktuellen Status einer Transportumgebung und dynamischen Regeln weiter. Es können mehrere Service Provider für eine Transaktion ausgewählt werden. Regeln für die Auswahl des Anwendungsdienstes können von einem Client aus selektiv auf das Gateway hochgeladen werden. Die Regeln für verschiedene verfügbare Anwendungsdienste können auf verschiedene Gateways verteilt werden.

### Aufgabe der Erfindung

Der Erfindung liegt die Aufgabe zugrunde, Lösungen bereitzustellen, welche die aus dem Stand der Technik bekannten Nachteile zumindest teilweise vermeiden und welche es einem User ermöglichen, auf einfache und sichere Art auf Daten zuzugreifen, die in verschiedenen Computernetzwerken gespeichert sind, und die einem Nutzer eine transparente bzw. vereinheitlichte Sicht auf die Daten ermöglichen.

### Erfindungsgemäße Lösung

Diese Aufgabe wird erfindungsgemäß durch ein Verfahren und ein System zum Zugreifen auf Daten durch eine Clienteinrichtung in einem verteilten Netzwerksystem nach den unabhängigen Ansprüchen 1 und 6 gelöst. Vorteilhafte Ausgestaltungen der Erfindung sind in den jeweiligen abhängigen Ansprüchen angegeben.

### Kurzbeschreibung der Figuren

Weitere Einzelheiten und Merkmale der Erfindung sowie konkrete Ausführungsbeispiele der Erfindung ergeben sich aus der nachfolgenden Beschreibung in Verbindung mit der Zeichnung. Es zeigt:
- Fig. 1: eine schematische Übersicht einer Architektur eines Netzwerksystems gemäss einem Ausführungsbeispiel der Erfindung.
- Fig. 2: ein Beispiel verschiedener Business-Objekt-Server mit jeweils mehreren Offices, auf die ein User Zugriff hat;
- Fig. 3: ein Beispiel für den Aufbau einer Zugriffsanforderungsnachricht sowie Beispiele von Relationen, mit denen ermittelt wird, auf welchen Business-Objekt-Servern ein User Zugriff hat und auf welchen Business-Objekt-Servern die Businessobjekte gespeichert sind, die ein User angefordert hat;
- Fig. 4: einen beispielhaften Aufbau einer Masterklasse sowie den Aufbau von drei verschiedenen Businessobjekten die in drei verschiedenen Business-Objekt-Servern gespeichert sind, zur Erläuterung des Transformationsservices; und
- Fig. 5: ein Flussdiagramm zu dem Verfahren gemäss einem Ausführungsbeispiel der Erfindung.

### Detaillierte Beschreibung der Erfindung

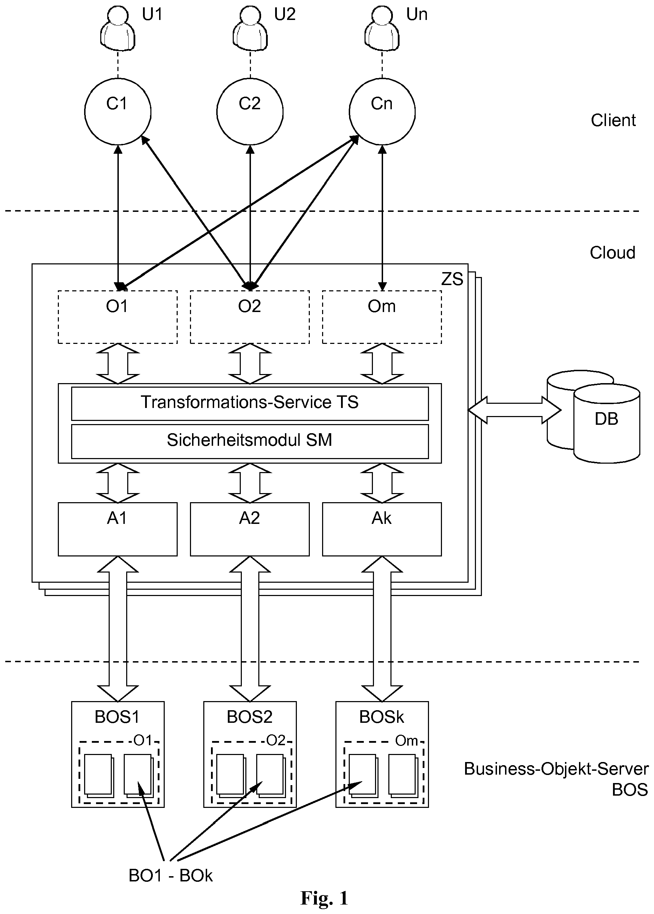

Fig. 1 zeigt schematisch eine Ausgestaltung einer Architektur eines Netzwerksystems gemäss einem Ausführungsbeispiel der Erfindung. Das Netzwerkssystem ist zum Zugreifen auf Daten geschickt.

Das verteilte Netzwerksystem umfasst im Wesentlichen ein zentrales Serversystem ZS, eine Anzahl von Clienteinrichtungen C1, C2, Cn und eine Anzahl von Business-Objekt-Servern BOS1, BOS2, BOSk. Die Clienteinrichtungen und die Business-Objekt-Server sind jeweils über ein Kommunikationsnetzwerk, etwa das Internet mit dem zentralen Serversystem ZS gekoppelt.

Die Clienteinrichtungen können herkömmliche Personalcomputer, tragbare Kleincomputer oder Smartphones sein. Über eine Clienteinrichtung kann ein User U1, U2, Un auf die Business-Objekt-Server zugreifen und Daten (Businessobjekte) von den Business-Objekt-Servern lesen bzw. schreiben.

Ein Business-Objekt-Server kann eine Servereinrichtung sein, in der eine oder mehrere Applikation laufen. Eine Applikation kann eine Standardapplikation oder eine proprietäre Applikation sein. Beispiele für eine Applikation sind etwa Mail-Server, Content-Management-Systeme, Finanzapplikationen aber auch Datenbanksysteme.

In den Business-Objekt-Servern BOS1, BOS2, BOSk sind jeweils eine Anzahl von Businessobjekten BO1 bis BOk gespeichert. Jeder User kann über eine Clienteinrichtung auf die in den Business-Objekt-Servern gespeicherten Businessobjekten zugreifen, wobei anhand vorbestimmter Zugriffsberechtigungen festgelegt werden kann, auf welche Businessobjekte ein User Zugriff hat.

Ein Businessobjekt setzt sich zusammen aus Daten, die das Businessobjekt beschreiben, und gegebenenfalls aus Methoden, mit denen die Daten manipuliert, d.h. be- oder verarbeitet werden können. Beispiele für Businessobjekte sind etwa Dokumente, Rechnungen, eMails, Akten, Produkte, Kunden, etc.

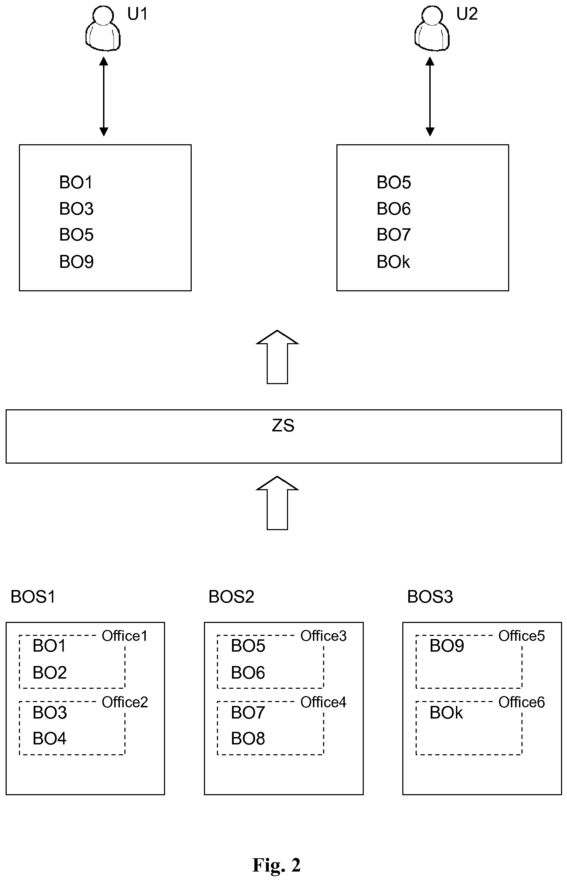

Die in den Business-Objekt-Servern gespeicherten Businessobjekte können jeweils einem Office (logisches Office) zugeordnet sein, wobei jedem User bzw. jeder Clienteinrichtung Zugriff auf eine Anzahl von Offices gewährt werden kann. Ein Beispiel der Zuordnung von Businessobjekten zu Offices, die jeweils in einem Business-Objekt-Server gespeichert sind, und Beispiele für den Zugriff auf unterschiedliche Businessobjekte durch einen User werden mit Bezug auf Fig. 2 näher beschrieben. Wichtig ist, dass jedes Businessobjekt nur genau einem Office zugeordnet sein kann.

Ein Office ist eine Definition, die Businessobjekte logisch zusammenfasst (logisches Office), wobei jedem Office Businessobjekte unterschiedlicher Business-Objekt-Klassen zugeordnet werden können.

Das zentrale Serversystem ZS kann eine Anzahl von Servereinrichtungen umfassen, die mit einer Datenbank DB gekoppelt sind. Das zentrale Serversystem ist in der hier gezeigten Ausgestaltung in der Cloud angeordnet, sodass von den Clienteinrichtungen aus ein einfacher Zugriff auf das zentrale Serversystem über das Internet gewährleistet ist.

Das zentrale Serversystem ZS umfasst zudem zumindest einen Transformations-Service TS, ein Sicherheitsmodul SM und eine Anzahl von Adaptern A1, A2, Ak.

Über die Adapter A1, A2, Ak wird der Zugriff von dem zentralen Serversystem auf die einzelnen Business-Objekt-Server abgewickelt. Handelt es sich bei einem Business-Objekt-Server beispielsweise um ein relationales Datenbanksystem kann der Adapter als SQL-Adapter (SQL-Client) ausgestaltet sein. Stellt ein Business-Objekt-Server beispielsweise einen Web-Service zum Zugriff auf die in dem Business-Objekt-Server gespeicherten Businessobjekte bereit, kann der Adapter ausgestaltet sein, Funktionen bzw. Methoden des Webservices aufzurufen.

Das zentrale Serversystem ZS ist angepasst, in Abhängigkeit von der Art des Business-Objekt-Servers bzw. in Abhängigkeit von den zu lesenden Businessobjekten in dem Business-Objekt-Server einen geeigneten Adapter aus einer Anzahl von Adaptern auszuwählen, um den Zugriff auf die zu lesenden Businessobjekte zu realisieren.

Der Zugriff auf die in den Business-Objekt-Servern gespeicherten Businessobjekte durch eine Clienteinrichtung wird nachfolgend näher beschrieben.

Ein User U1 meldet sich über eine Clienteinrichtung C1 an dem zentralen Serversystem ZS an, wobei von der Clienteinrichtung C1 mindestens eine Clientkennung CK an das zentrale Serversystem ZS übertragen wird. Die Clientkennung CK kann eine eindeutige Kennung des Users oder eine eindeutige Kennung der Clienteinrichtung sein. Anhand der entgegengenommenen Clientkennung CK ermittelt das Sicherheitsmodul SM des zentralen Serversystems ZS auf welche Offices der User U1 Zugriff hat. Ferner ermittelt das Sicherheitsmodul SM auf welche Businessobjekte der Offices, auf die der User U1 zugreifen kann, Zugriff hat.

Anhand der von dem Sicherheitsmodul SM ermittelten Zugriffsberechtigungen gewährt das zentrale Serversystem ZS dem User U1 bzw. der Clienteinrichtung C1 Zugriff auf die Offices O1 und O2, wobei in Fig. 1 die Offices O1, O2 und Om zum besseren Verständnis in dem zentralen Serversystem ZS gezeigt sind, um zu verdeutlichen, dass beispielsweise der User U1 auf die Offices O1 und O2 und der User U2 beispielsweise auf das Office O2 Zugriff haben. Die in Fig. 1 im zentrale Serversystem ZS gezeigten Offices O1, O2 und Om entsprechen Offices in den Business-Objekt-Servern BOS1 bis BOSk.

Wie vorstehend bereits erläutert, umfasst jeder Business-Objekt-Server BOS1 bis BOSk eine Anzahl von Offices, wobei jedes Businessobjekt BO1 bis BOk in dem jeweiligen Business-Objekt-Server (genau) einem Office zugeordnet wird.

In einer bevorzugten Ausführungsform der Erfindung sind die Offices, auf die der User U1 Zugriff hat, für den User U1 transparent. Das bedeutet, dass, wenn das zentrale Serversystem ZS Businessobjekte von dem Business-Objekt-Server an die Clienteinrichtung C1 überträgt, für den User U1 nicht sichtbar ist, von welchem Business-Objekt-Server die übertragenen Businessobjekte tatsächlich stammen. Erfindungsgemäß kann der User U1 für jedes übertragene Businessobjekt von dem zentralen Serversystem ZS Informationen darüber anfragen, in welchem Business-Objekt-Server bzw. in welchem Office ein Businessobjekt gespeichert ist.

In dem in Fig. 1 gezeigten Beispiel hat der User U1 Zugriff auf die Offices O1 und O2, der User U2 auf das Office O2 und der User Un auf die Offices O1, O2 und Om.

Der User U1 kann nach einem erfolgreichen Login an dem zentralen Serversystem ZS Businessobjekte einer bestimmten Business-Objekt-Klasse anfordern. Beispielsweise kann der User U1 Dokumente (die Business-Objekt-Klasse ist hier "Dokument") anfordern, auf die er Zugriff hat, unabhängig davon, auf welchen Business-Objekt-Servern bzw. in welchem Offices der Business-Objekt-Server die Dokumente gespeichert sind. Diese Anforderung kann beispielsweise dadurch erfolgen, indem der User U1 über die Clienteinrichtung C1 dem zentralen Serversystem ZS eine Objekt-Klassen-Kennung, beispielsweise "Dokument" übermittelt. Anhand der Clientkennung CK und der Objekt-Klassen-Kennung kann das zentrale Serversystem nunmehr ermitteln, von welchen Business-Objekt-Servern bzw. von welchen Offices in welchen Business-Objekt-Servern Dokumente für den User U1 gelesen werden können.

Auf welche konkrete Dokumente (d.h. Ausprägungen der Business-Objekt-Klasse "Dokument) der User U1 tatsächlich Zugriff hat, kann von dem Sicherheitsmodul SM ermittelt werden, wobei die Zugriffsberechtigungen für ein konkretes Dokument entweder in dem zentralen Serversystem ZS oder in dem entsprechenden Business-Objekt-Server gespeichert sein können.

Nachdem das zentrale Serversystem ZS ermittelt hat, in welchem Business-Objekt-Server bzw. in welchen Offices die angeforderten Dokumente gespeichert sind, kann das zentrale Serversystem Zugriffsinstruktionen ZI erzeugen, mit denen es dem zentralen Serversystem ZS ermöglicht wird, die angeforderten Businessobjekte (in diesem Beispiel Dokumente) von dem jeweiligen Business-Objekt-Servern bzw. von den Offices in den Business-Objekt-Servern zu lesen. Um auf die jeweilige Business-Objekt-Server zugreifen zu können, wählt das zentrale Serversystem ZS in Abhängigkeit von dem jeweiligen Business-Objekt-Server und/oder in Abhängigkeit von der Business-Objekt-Klasse einen geeigneten Adapter A1, A2, Ak aus und übergibt die Zugriffsinstruktionen dem ausgewählten Adapter, der anschließend die jeweiligen angeforderten Businessobjekte gemäß der Zugriffsinstruktionen von den Business-Objekt-Servern einliest und zur Übertragung auf die Clienteinrichtung C1 bereitstellt.

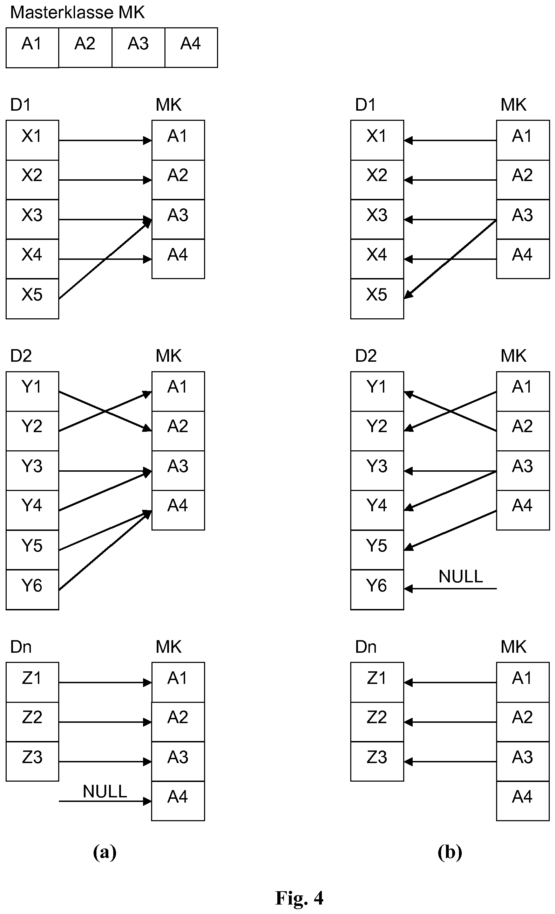

Vor dem Übertragen der gelesenen Businessobjekte an die Clienteinrichtung C1 ist es vorgesehen, dass das zentrale Serversystem die von dem Business-Objekt-Servern gelesenen Businessobjekte harmonisiert, damit dem User U1 eine vereinheitlichte, d.h. harmonisierte Sicht auf die angeforderten Businessobjekte bereitgestellt werden kann. Hierzu ist in dem zentralen Serversystem ZS der Transformationsserver bzw. Transformations-Service TS vorgesehen, der die von den Business-Objekt-Servern gelesenen Businessobjekte von einer Serverdatenstruktur in eine Clientdatenstruktur transformiert. Durch die Transformation werden die gelesenen Businessobjekte vereinheitlicht, d.h., auf einen gemeinsamen Nenner gebracht. Ein Beispiel für eine erfindungsgemäße Transformation wird mit Bezug auf Fig. 4 näher beschrieben.

Transformieren von Businessobjekten von einer Serverdatenstruktur in eine Clientdatenstruktur bzw. Harmonisieren von gelesenen Businessobjekten bedeutet nicht, dass ein Abgleich von Daten (Datenabgleich), d.h. von Businessobjekten stattfindet oder durchgeführt wird. Ein Datenabgleich (Abgleich von Businessobjekten) ist deshalb nicht erforderlich, weil jedes Businessobjekt nur genau einmal vorkommen kann. D.h., ein Businessobjekt kann weder in einem Office mehr als einmal vorkommen, noch kann ein Businessobjekt in mehr als einem Office vorkommen. Es ist daher nicht notwendig, unterschiedliche eindeutige Kennungen (z.B. eine ID) von mehreren ansonsten identischen Businessobjekten abzugleichen, entweder jedem identischen Businessobjekt die gleiche Kennung zuzuordnen oder die mehreren identischen Businessobjekte zu einem Businessobjekt zusammenzuführen.

Nachdem die Businessobjekte transformiert, d.h. harmonisiert worden sind, werden die transformierten Businessobjekte als Ergebnis auf die Anforderung durch den User U1 an die Clienteinrichtung C1 übertragen, wo sie in einer für den User U1 vereinheitlichten Sicht angezeigt werden können.

Die für die Transformation notwendigen Transformationsregeln werden vorzugsweise in der Datenbank DB gespeichert.

Vorstehend ist beschrieben worden, wie ein User U1 auf Businessobjekte, die in unterschiedlichen Offices und in unterschiedlichen Business-Objekt-Servern gespeichert sind, lesend zugreifen kann. In entsprechender Weise kann ein User U1 auch Businessobjekte in ein Office in einem bestimmten Business-Objekt-Server schreiben. Hierzu werden die Daten des zu schreibenden Businessobjektes von der Clienteinrichtung C1 an das zentrale Serversystem ZS vorzugsweise zusammen mit einer Office-Kennung übertragen. Das Sicherheitsmodul SM ermittelt vor dem Schreiben des Businessobjektes, ob der User U1 in dem entsprechenden Office über die für das Schreiben notwendigen Zugriffsberechtigungen verfügt. Ist dies der Fall, kann der Transformations-Service TS das von der Clienteinrichtung C1 entgegengenommene Businessobjekt von einer Clientdatenstruktur in eine Serverdatenstruktur transformieren, um zu gewährleisten, dass das Businessobjekt korrekt in dem Office des Business-Objekt-Servers gespeichert wird.

Die Transformation bzw. die Harmonisierung der Businessobjekte ist sowohl beim Schreiben als auch beim Lesen der Businessobjekte notwendig, denn eine Business-Objekt-Klasse, z.B. Dokumente, kann in unterschiedlichen Business-Objekt-Servern oder auch in unterschiedlichen Offices in einem Business-Objekt-Server unterschiedlich ausgeprägt sein. Beispielsweise kann in einem ersten Office die Business-Objekt-Klasse "Dokumente" zehn Attribute aufweisen, während die Business-Objekt-Klasse "Dokumente" in einem zweiten Office beispielsweise lediglich fünf Attribute aufweisen kann. Ein Beispiel für eine Transformation eines Businessobjektes von einer Clientdatenstruktur in eine Serverdatenstruktur wird ebenfalls mit Bezug auf Fig. 4 näher beschrieben.

Das vorstehend beschriebene Zugriffsverfahren bietet mehrere Vorteile:
- In einem Business-Objekt-Server kann eine Anzahl verschiedener Offices definiert werden, wobei einem Office in einem Business-Objekt-Server eine Anzahl von Businessobjekten zugeordnet werden können. Bei mehreren Business-Objekt-Servern mit jeweils einer Anzahl von Offices, in denen jeweils eine Anzahl von Businessobjekten gespeichert sind, kann einem User Zugriff auf Businessobjekte in verschiedenen Offices in verschiedenen Business-Objekt-Servern gewährt werden, wobei dem User die einzelnen Businessobjekte in einer harmonisierten Form präsentiert werden.
- Für den User ist es transparent, in welchen Offices und in welchen Business-Objekt-Servern die Businessobjekte gespeichert sind, auf die der User Zugriff hat.
- In einem Business-Objekt-Server können unterschiedliche Applikationen oder mehrere Instanzen einer einzelnen Applikation laufen, wobei jede Applikation oder jede Instanz einer Applikation ein eigenes Office sein kann oder wobei für jede Applikation oder für jede Instanz einer Applikation eine Anzahl von Offices definiert werden können.

Beispielsweise kann auf einem ersten Business-Objekt-Server eine Applikation A und auf einem zweiten Business-Objekt-Server eine Applikation B laufen, wobei in der Applikation A mehrere Offices definiert sind und wobei die Applikation B ein einzelnes Office repräsentiert. Sind in allen drei Offices Businessobjekte einer bestimmten Business-Objekt-Klasse gespeichert und hat ein User Zugriff auf diese drei Offices, kann der User die Businessobjekte dieser Business-Objekt-Klasse lesen bzw. schreiben, sofern er auf die jeweiligen Businessobjekte der Business-Objekt-Klasse eine entsprechende Zugriffsberechtigung besitzt. Für den User ist es hierbei transparent, dass in dem ersten Business-Objekt-Server eine Applikation mit zwei Offices und in dem zweiten Business-Objekt-Server eine Applikation, die ein eigenes Office repräsentiert, läuft. Ferner ist es für den User auch transparent, dass die Businessobjekte auf unterschiedlichen Business-Objekt-Servern gespeichert sind.

**Fig. 2** zeigt ein Beispiel mehrerer Business-Objekt-Server, in denen jeweils eine Anzahl von Businessobjekten gespeichert sind, und zwei User U1, U2, denen jeweils Businessobjekte zur Verfügung gestellt werden, auf die der jeweilige User Zugriff hat.

In Fig. 2 sind drei Business-Objekt-Server BOS1, BOS2 und BOS3 gezeigt. Jeder der drei Business-Objekt-Server weist zwei Offices auf bzw. in jedem der drei Business-Objekt-Server sind zwei Offices definiert. Beispielsweise sind in dem Business-Objekt-Server BOS1 die Offices "Office 1" und "Office 2" definiert. Den Offices in den Business-Objekt-Servern BOS1 und BOS2 sind jeweils zwei Businessobjekte zugeordnet, während in dem Business-Objekt-Server BOS3 den beiden Offices jeweils ein Businessobjekt zugeordnet ist. Der User U1 hat Zugriff auf die Offices "Office 1" und "Office 2" in dem Business-Objekt-Server BOS1, auf das "Office 3" in dem Business-Objekt-Server BOS2 und auf das "Office 5" in dem Business-Objekt-Server BOS3, wobei der User U1 jeweils nur auf einige Business-objekte der jeweiligen Offices zugreifen darf.

Nachdem das zentrale Serversystem ZS von dem User U1 eine Zugriffsanforderungsnachricht empfangen hat, ermittelt das zentrale Serversystem ZS anhand der Zugriffsberechtigung für den User U1, welche Businessobjekte aus welchen Offices bzw. Business-Objekt-Server der User U1 lesen darf. Aufgrund der ermittelten Zugriffsberechtigungen liest das zentrale Serversystem ZS (mittel der vorstehend beschriebenen Adapter) das Businessobjekt BO1 von dem Office 1, das Businessobjekt BO3 von dem Office 2, das Businessobjekt BO5 von dem Office 3 und das Businessobjekt BO9 von dem Office 5 aus, transformiert die gelesenen Businessobjekte und überträgt die transformierten Businessobjekte BO1, BO3, BO5 und BO9 an die Clienteinrichtung des User U1.

Nach einer Zugriffsanforderungsnachricht, die das zentrale Serversystem ZS von dem User U2 erhalten hat, werden auch für den User U2 die entsprechenden Businessobjekte BO5, BO6, BO7 und BOk aus den jeweiligen Offices in den Business-Objekt-Servern gelesen und nach einer Transformation an die Clienteinrichtung des Users U2 übertragen.

In beiden Fällen bewirkt die Transformation, dass die User U1, U2 eine vereinheitlichte Sicht auf die gelesenen Businessobjekte erhalten, obwohl die Businessobjekte in unterschiedlichen Business-Objekt-Servern bzw. unterschiedlichen Offices in den Business-Objekt-Servern gespeichert sind.

In dem in Fig. 2 gezeigten Beispiel sind die Businessobjekte in Business-Objekt-Servern gespeichert. Alternativ oder zusätzlich können Businessobjekte auch direkt in dem zentralen Serversystem ZS gespeichert sein. Ferner können in dem zentralen Serversystem auch Offices definiert werden, denen Businessobjekte zugeordnet sein können.

Wichtig ist, dass jedes Businessobjekt nur in einem einzigen Office leben kann, d.h., nur einem einzigen Office zugeordnet sein kann.

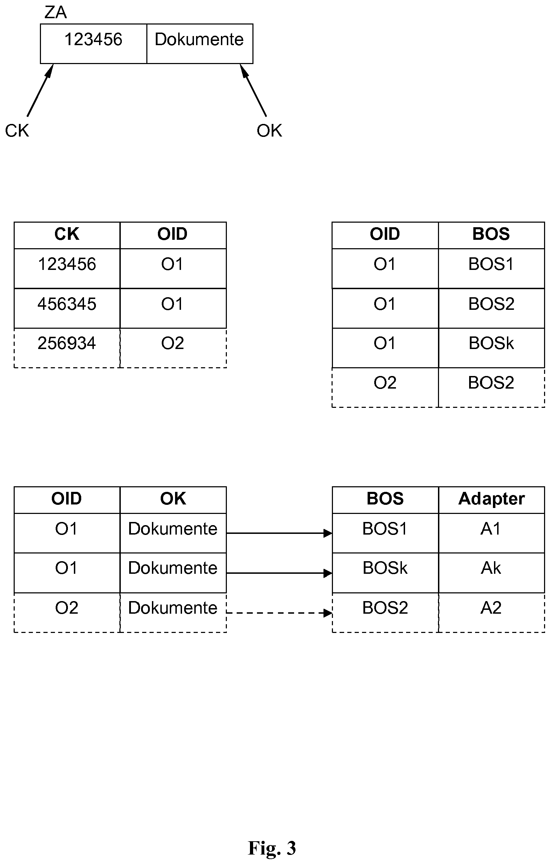

**Fig. 3** zeigt ein Beispiel einer Zugriffsanforderungsnachricht ZA und mehrere Relationen, anhand derer ermittelt werden kann, auf welchen Business-Objekt-Servern die Businessobjekte einer Business-Objekt-Klasse gespeichert sind und welche Adapter für den Zugriff auf die jeweiligen Businessobjekte auszuwählen sind.

Die Zugriffsanforderungsnachricht weist in dem hier gezeigten Beispiel eine Clientkennung CK und eine Business-Objekt-Klassen-Kennung OK auf Die Clientkennung kann eine eindeutige Kennung einer Clienteinrichtung oder eine eindeutige Kennung eines Users sein. Die Business-Objekt-Klassen-Kennung OK gibt an, welche Businessobjekte einer welchen Business-Objekt-Klasse gelesen werden sollen.

In einer ersten Relation werden die Clientkennungen und die einer Clientkennung zugewiesenen Office-Kennungen OID gespeichert. Beispielsweise ist der Clientkennung "123456" die Office-Kennung "O1" zugeordnet, d.h., ein User bzw. eine Clienteinrichtung mit der Clientkennung "123456" hat auf das Office mit der Office-Kennung "O1" Zugriff und kann daher Businessobjekte in dem Office O1 lesen.

In einer zweiten Relation werden den Office-Kennungen Business-Objekt-Server BOS zugeordnet. Beispielsweise sind der Office-Kennung O1 die Business-Objekt-Server BOS1, BOS2 und BOSk zugeordnet, d.h., dass sich auf den Business-Objekt-Servern BOS1, BOS2 und BOSk jeweils ein Teil des Offices mit der Office-Kennung O1 befindet.

In einer dritten Relation wird einem Tupel aus Office-Kennung und Business-Objekt-Klassen-Kennung ein Tupel aus Business-Objekt-Server und Adapter zugeordnet. Anhand der dritten Relation kann ermittelt werden, welcher Adapter für eine bestimmte Business-Objekt-Klasse auf einem bestimmten Business-Objekt-Server zu verwenden ist, um auf die Businessobjekte zugreifen zu können.

Beispielsweise muss für die Business-Objekt-Klasse Dokumente in dem Office O1 auf dem Business-Objekt-Server BOS1 der Adapter A1 verwendet werden, während für die Business-Objekt-Klasse Dokumente in dem Office O1 auf dem Business-Objekt-Server BOSk der Adapter Ak zu verwenden ist. Mit der dritten Relation wird gewährleistet, dass für die zu lesenden Businessobjekte in Abhängigkeit von der Business-Objekt-Klasse, von dem Office und von dem Business-Objekt-Server jeweils der korrekte Adapter verwendet wird.

Ein Adapter kann beispielsweise ein SQL-Client sein, wenn die Businessobjekte in einem SQL-Server gespeichert sind. Ferner kann ein Adapter beispielsweise ein Oracle-Client sein, wenn die Businessobjekte in einem Oracle-Server gespeichert sind. Im Wesentlichen stellt ein Adapter eine Schnittstelle zur Verfügung, mit der auf die in einem Business-Objekt-Server gespeicherten Businessobjekte zugegriffen werden kann. Wie der Adapter konkret ausgestaltet ist hängt im Wesentlichen von dem Business-Objekt-Server ab, auf den zugegriffen werden soll. Beispielsweise kann der Adapter für einen bestimmten Business-Objekt-Server von dem Anbieter bzw. Betreiber des Business-Objekt-Servers dem zentralen Serversystem ZS zur Verfügung gestellt werden.

**Fig. 4** zeigt Beispiele für eine Transformation von Businessobjekten von einer Serverdatenstruktur in eine Clientdatenstruktur und Beispiele für eine Transformation eines Businessobjektes von einer Clientdatenstruktur in eine Serverdatenstruktur.

Gezeigt ist eine Masterklasse MK, die eine Business-Objekt-Klasse, etwa "Dokumente" definiert. Die Masterklasse MK umfasst vier Attribute A1 bis A4. Ein transformiertes bzw. harmonisiertes Businessobjekt weist die vier Attribute der Masterklasse MK auf. Damit stellt die Masterklasse MK den gemeinsamen Nenner für die Businessobjekte "Dokumente" dar, die jeweils unterschiedliche und/oder unterschiedlich viele Attribute aufweisen können.

Die Materklasse MK kann eine abstrakte Business-Objekt-Klasse sein, von der konkrete Business-Objekt-Klassen abgeleitet sein können. Beispielsweise können von einer abstrakten Business-Objekt-Klasse "Akten" die konkreten Business-Objekt-Klassen "Patentakte" und "Personalakte" abgeleitet sein, wobei jede der abgeleiteten Klassen zusätzliche Attribute aufweisen kann. Werden etwa Businessobjekte der Klassen "Patentakte" und "Personalakte" angefordert, kann der Transformationsservice die konkreten Businessobjekte (d.h., Instanzen der Klassen "Patentakte" und "Personalakte") in Instanzen der Business-Objekt-Klasse "Akten" transformieren, da die Klassen "Patentakte" und "Personalakte" von der Klasse "Akten" abgeleitet sind. Werden hingegen nur Businessobjekte der Klasse "Patentakte" angefordert kann gegebenenfalls auf eine Transformation verzichtet werden.

Beim Lesen der Businessobjekte von den Business-Objekt-Servern werden die gelesenen Businessobjekte anhand einer Anzahl von Transformationsregeln in eine Instanz der Masterklasse MK transformiert. Die Transformationsregeln geben dabei an, welche Attribute eines Businessobjektes auf welche Attribute einer Instanz der Masterklasse abgebildet werden.

Fig. 4a zeigt eine Transformation von drei Businessobjekten D1, D2, Dn, die in unterschiedlichen Business-Objekt-Servern gespeichert sein können, zu einer Instanz der Masterklasse MK. Das Businessobjekt D1 weist fünf Attribute X1 bis X5 auf, die in die Attribute A1 bis A4 einer Instanz der Masterklasse MK transformiert werden. Gemäß den Transformationsregeln werden die Attribute X1, X2 und X4 des Businessobjektes D1 auf die Attribute A1, A2 bzw. A4 der Instanz der Masterklasse MK abgebildet (1:1-Abbildung). Die Attribute X2 und X5 des Businessobjektes D1 werden in das Attribute A3 der Masterklasse MK transformiert bzw. abgebildet (Vereinigungs-Abbildung).

Für das Businessobjekt D2 sind zwei 1:1-Abbildungen und zwei Vereinigungsabbildungen definiert worden, die die sechs Attribute Y1 bis Y6 des Businessobjektes D2 in die vier Attribute A1 bis A4 der Instanz der Masterklasse MK transformieren.

Für das Businessobjekt Dn sind drei 1:1-Abbildungen definiert worden, die die Attribute Z1 bis Z3 des Businessobjektes Dn in die Attribute A1 bis A3 der Instanz der Masterklasse MK transformieren. Ferner ist hier eine Transformationsregel definiert worden, die angibt, dass in dem Attribut A4 der Instanz der Masterklasse MK ein konstanter Wert (hier NULL) geschrieben werden soll.

Alle drei Businessobjekte D1, D2 und Dn werden demnach in eine Instanz der Masterklasse MK transformiert, wobei die drei Instanzen der Masterklasse MK jeweils die gleichen Attribute aufweisen, sodass einem User nach der Transformation der Businessobjekte eine einheitliche Sicht auf die Businessobjekte zur Verfügung gestellt werden kann.

Fig. 4b zeigt eine Transformation von Instanzen einer Masterklasse MK in jeweils ein Businessobjekt. Hierbei werden Businessobjekte von einer Clientdatenstruktur in eine Serverdatenstruktur transformiert, um die transformierten Businessobjekte korrekt in den Business-Objekt-Servern bzw. in den Offices der Business-Objekt-Server speichern zu können.

Im ersten Beispiel werden die Attribute A1 bis A4 einer Instanz der Masterklasse MK in die Attribute X1 bis X5 des Businessobjektes D1 transformiert, wobei für die Attribute A1, A2 und A4 der Instanz der Masterklasse eine 1:1-Transformation definiert ist. Für das Attribut A3 der Masterklasse MK ist eine Transformationsregel definiert worden, die den Wert des Attributes A3 in das Attribut X3 und in das Attribut X5 des Businessobjektes D1 abbildet. Beispielsweise kann ein Teil des Wertes des Attributes A3 in das Attribut X3 und ein anderer Teil des Attributes A3 in das Attribut X5 des Businessobjektes D1 geschrieben werden.

In dem zweiten Beispiel werden die Attribute A1 bis A4 einer Instanz der Masterklasse MK in die Attribute Y1 bis Y6 des Businessobjektes D2 transformiert, wobei hier zusätzlich eine Transformationsregel vorgesehen ist, mit der ein konstanter Wert (hier NULL) in das Attribut Y6 des Businessobjektes D2 geschrieben wird.

In dem dritten Beispiel werden die Attribute A1 bis A4 einer Instanz der Masterklasse MK auf die Attribute Z1 bis Z3 des Businessobjektes Dn transformiert, wobei für das Attribut A4 keine Transformationsregel vorgesehen ist, sodass lediglich die Attribute A1 bis A3 anhand einer 1:1-Abbildung auf die Attribute Z1 bis Z3 des Businessobjektes Dn abgebildet werden.

Durch die Transformation der Clientdatenstruktur in eine Serverdatenstruktur kann gewährleistet werden, dass die zu schreibenden Businessobjekte korrekt in die jeweiligen Offices bzw. in die jeweiligen Business-Objekt-Server geschrieben werden.

Damit ist es nicht nur möglich, auf Offices in Business-Objekt-Servern lesend zuzugreifen, sondern auch Businessobjekte in verschiedene Offices verschiedener Business-Objekt-Server zu speichern.

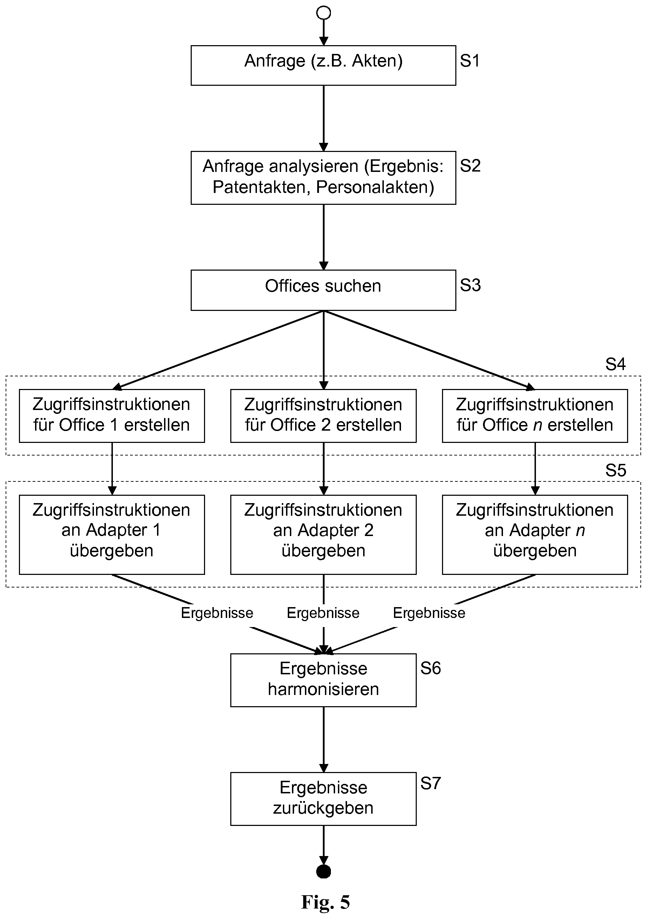

**Fig. 5** zeigt ein Flussdiagramm eines Verfahrens gemäss einem Ausführungsbeispiel der Erfindung.

In einem ersten Schritt S1 nimmt das zentrale Serversystem ZS eine Anfrage, d.h., eine Zugriffsanforderungsnachricht von einer Clienteinrichtung entgegen. In dem hier gezeigten Beispiel fordert die Clienteinrichtung alle Akten an, auf die der User der Clienteinrichtung Zugriff hat. Im Rahmen der Zugriffsanforderungsnachricht ist "Akten" eine Business-Objekt-Klasse zu der ein User konkrete Instanzen, d.h., Businessobjekte anfordert.

In einem weiteren Schritt S2 analysiert das zentrale Serversystem die entgegengenommene Anfrage. Hierbei ermittelt das zentrale Serversystem zu der Business-Objekt-Klasse "Akten" sämtliche direkt oder indirekt abgeleiteten Business-Objekt-Klassen. In dem vorliegenden Beispiel sind dies die Business-Objekt-Klassen "Patentakten" und "Personalakten". Ferner ermittelt das zentrale Serversystem für welche der ermittelten Business-Objekt-Klassen "Patentakten" und "Personalakten" der anfragende User Zugriff hat. Im vorliegenden Beispiel sei angenommen, dass der anfragende User auf beide Business-Objekt-Klassen "Patentakten" und "Personalakten" zugreifen darf Durch diese Analyse wird es möglich, bereits vor dem Zugriff auf die konkreten Businessobjekte zu ermitteln, welche konkreten Businessobjekte überhaupt gelesen werden müssen. Die Netzwerklast zwischen dem zentralen Serversystem und den Business-Objekt-Servern, in denen die konkreten Businessobjekte gespeichert sind, kann so erheblich reduziert werden.

Im nachfolgenden Schritt S3 ermittelt das zentrale Serversystem die Offices, in denen die angefragten Businessobjekte gespeichert sind. Anhand der ermittelten Offices und der ermittelten Business-Objekt-Klassen kann das zentrale Serversystem auch die erforderlichen Adapter ermitteln, über die die Zugriffe auf die konkreten Businessobjekte abgewickelt werden. In dem hier gezeigten Beispiel sind die Offices "Office 1", "Office 2" und "Office n" ermittelt worden.

In den Schritten S4 und S5 erstellt das zentrale Serversystem für jedes Office (in Abhängigkeit von der konkreten Business-Objekt-Klasse, auf die in dem jeweiligen Office zugegriffen wird) Zugriffsinstruktionen (S4) und übergibt die Zugriffsinstruktionen an den jeweiligen Adapter (S5). In einer bevorzugten Ausgestaltung der Erfindung werden die Zugriffsinstruktionen in der Notation einer sogenannten Business-Query-Language (BQL) formuliert bzw. definiert. Das hat den Vorteil, dass die Zugriffsinstruktionen im Wesentlichen unabhängig von der konkreten Definition der Business-Objekt-Klassen in einer standardisierten Form definiert werden können.

Die Zugriffsinstruktionen oder die in der Business-Query-Language definierten Zugriffsinstruktionen werden dann von dem jeweiligen Adapter in konkrete Abfragen (z.B. Datenbankabfragen, Funktionsaufrufe, WebService-Aufrufe, etc.) übersetzt, die angepasst sind, um auf die jeweiligen Business-Objekt-Server zuzugreifen. Die Adapter führen dann die konkreten Abfragen aus bzw. greifen mittels der konkreten Abfragen auf die jeweiligen Business-Objekt-Server zu.

Bei den Zugriffsinstruktionen handelt es sich demnach nicht nur um eine Information, die einen Nutzer eindeutig kennzeichnet, z.B. ein Token, sondern umfasst Informationen, anhand derer ein Adapter konkrete Anweisungen (z.B. SQL-Befehle, ABAP-Programme, Web-Service-Aufrufe, o.ä.) erzeugen bzw. erstellen kann, mit denen bestimmte oder angeforderte Businessobjekte aus den Offices gelesen bzw. selektiert werden können.

Auf die jeweilige Abfrage hin geben die Business-Objekt-Server dem jeweiligen Adapter bzw. dem zentralen Serversystem Ergebnisse (konkrete Businessobjekte) zurück.

In dem Schritt S6 werden die Ergebnisse von dem zentralen Serversystem harmonisiert, wie mit Bezug auf Fig. 2 und Fig. 4 beschrieben. Durch das Harmonisieren der Ergebnisse wird dem User, der die Anfrage gestellt hat, eine einheitliche Sicht auf die angeforderten Businessobjekte ermöglicht, ohne dass der User wissen muss von welchem konkreten Office bzw. Business-Objekt-Server die Businessobjekte stammen. Offices und Business-Objekt-Server sind für den User transparent.

Im nächsten Schritt S7 werden die harmonisierten Ergebnisse bzw. Businessobjekte an die Clienteinrichtung übermittelt, wo sie an einer Anzeigeinrichtung zur Anzeige gebracht werden können.

Bezugszeichen:
- A1, A2, Ak: Adapter
- BOS1, BOS2, BOSk: Business-Objekt-Server
- BO1 - BOk: Businessobjekte (Instanzen einer Business-Objekt-Klasse)
- C1, C2, Cn: Clienteinrichtungen
- CK: Clientkennung
- D1, D2, Dn: Struktur einer Business-Objekt-Klasse
- DB: Datenbank
- MK: Masterklasse
- O1, O2, Om: Offices
- OID: Officekennung
- OK: Business-Obj ekt-Klassen-Kennung
- S1 bis S7: Verfahrensschritte
- SM: Sicherheitsmodul
- TS: Transformations-Service
- U1, U2, Un: User
- ZA: Zugriffsanforderungsnachricht
- ZI: Zugriffsinstruktionen
- ZS: zentrales Serversystem

## Patentansprüche

1. Verfahren zum Zugreifen auf Daten durch eine Clienteinrichtung in einem verteilten Netzwerksystem mit einem zentralem Serversystem (ZS), zumindest einer Clienteinrichtung (C1, C2, Cn) und zumindest einem Business-Objekt-Server (BOS1, BOS2, BOSk), wobei die zumindest eine Clienteinrichtung und der zumindest eine Business-Objekt-Server über ein Kommunikationsnetzwerk mit dem zentralem Serversystem gekoppelt sind, wobei in dem zumindest einen Business-Objekt-Server eine Anzahl von Business-Objekte (BO1 - BOk) gespeichert sind, **dadurch gekennzeichnet, dass**
- jeder Business-Objekt-Server eine Anzahl von Offices umfasst, wobei jedes Business-Objekt in dem jeweiligen Business-Objekt-Server einem Office (O1; O2; Om) zugeordnet wird,
- das zentrale Serversystem (ZS) von der Clienteinrichtung eine Zugriffsanforderungsnachricht (ZA) empfängt, wobei die Zugriffsanforderungsnachricht zumindest eine eindeutige Clientkennung (CK) umfasst und Informationen darüber enthält, welche Business-Objekte von den Business-Objekt-Servern gelesen werden sollen,
- das zentrale Serversystem (ZS) anhand der Clientkennung zumindest eine Zugriffsberechtigung ermittelt, wobei eine Zugriffsberechtigung angibt, auf welche Offices und auf welche Business-Objekte der Offices die Clienteinrichtung zugreifen darf,
- das zentrale Serversystem (ZS), nachdem es ermittelt hat, in welchen Offices die angeforderten Business-Objekte gespeichert sind, für die Business-Objekte, auf die die Clienteinrichtung zugreifen darf, Zugriffsinstruktionen (ZI) erzeugt, die unabhängig von der konkreten Definition der Business-Objekt-Klassen in einer standardisierten Form definiert werden, wobei anhand der Zugriffsinstruktionen die Business-Objekte von dem jeweiligen Office in dem jeweiligen Business-Objekt-Server gelesen werden und an die Clienteinrichtung übertragen werden, wobei die Zugriffsinstruktionen in konkrete Abfragen übersetzt werden, die angepasst sind, auf die jeweiligen Business-Objekt-Server zuzugreifen, und
- das zentrale Serversystem (ZS) die Business-Objekte vor dem Übertragen an die Clienteinrichtung harmonisiert, wobei das zentrale Serversystem einen Transformations-Service (TS) zum Harmonisieren der gelesenen Business-Objekte umfasst, wobei der Transformations-Service nach dem Lesen der Business-Objekte die Business-Objekte von einer Serverdatenstruktur in eine Clientdatenstruktur transformiert und die transformierten Business-Objekte zum Übertragen auf die Clienteinrichtung bereitstellt, wobei die Transformation der Business-Objekte von der Serverdatenstruktur in die Clientdatenstruktur anhand vorbestimmter Transformationsregeln erfolgt, und wobei jede der Transformationsregeln angibt, welches Datenfeld der Serverdatenstruktur in welche Datenfelder der Clientdatenstruktur transformiert wird.

2. Verfahren nach Anspruch 1, wobei in dem zentralen Serversystem (ZS)
- in einer ersten Relation die Clientkennung (CK) zumindest einer Officekennung (OID) zugeordnet ist, wobei die Officekennung ein Office in den Business-Objekt-Servern eindeutig identifiziert,
- in einer zweiten Relation eine Officekennung (OID) einem Business-Objekt-Server zugeordnet ist, und
- in einer dritten Relation einem Tupel aus einer Officekennung (OID) und einer Objektkennung (OK) zumindest ein Tupel aus einem Business-Objekt-Server und einem Adapter (A1, A2, Ak) zugeordnet ist,
wobei die Relationen in einer Datenbank (DB) gespeichert sind, die operativ mit dem zentralen Serversystem gekoppelt ist, wobei das zentrale Serversystem anhand der ersten und zweiten Relation ermittelt, auf welche Business-Objekt-Server die Clienteinrichtung zugreifen darf, wobei das zentrale Serversystem anhand der dritten Relation einen Adapter auswählt und dem ausgewählten Adapter die Zugriffsinstruktionen (ZI) zum Lesen der Business-Objekte übermittelt.

3. Verfahren nach einem der vorhergehenden Ansprüche, wobei die Zugriffsinstruktionen (ZI) zumindest die Clientkennung (CK) umfassen.

4. Verfahren nach einem der Ansprüche 2 oder 3, wobei die Zugriffsinstruktionen (ZI) von dem jeweiligen Adapter in die konkreten Abfragen übersetzt werden und wobei die jeweiligen Adapter die konkreten Abfragen ausführen oder mittels der konkreten Abfragen auf die jeweiligen Business-Objekt-Server zugreifen, wobei die konkreten Abfragen zumindest eines aus Datenbankabfragen, Funktionsaufrufe, WebService-Aufrufe, und eine Kombination hiervon umfassen.

5. Verfahren nach einem der vorhergehenden Ansprüche, wobei das zentrale Serversystem ein Sicherheitsmodul (SM) umfasst, welches die Zugriffsberechtigungen ermittelt, wobei die Zugriffsberechtigungen in dem zentralen Serversystem und/oder in den Business-Objekt-Servern gespeichert sind.

6. System zum Zugreifen auf Daten durch eine Clienteinrichtung, wobei das System zumindest ein zentrales Serversystem (ZS) umfasst, wobei das zentrale Serversystem mit zumindest einer Clienteinrichtung (C1, C2, Cn) und mit zumindest einem Business-Objekt-Server (BOS1, BOS2, BOSk) über ein Kommunikationsnetzwerk koppelbar ist, wobei in dem zumindest einen Business-Objekt-Server eine Anzahl von Business-Objekten gespeichert sind, wobei jeder Business-Objekt-Server eine Anzahl von Offices umfasst, wobei jedes Business-Objekt in dem jeweiligen Business-Objekt-Server einem Office (O1, O2, On) zugeordnet ist, und wobei das zentrale Serversystem
- Mittel zum Empfangen einer Zugriffsanforderungsnachricht (ZA) von der Clienteinrichtung aufweist, wobei die Zugriffsanforderungsnachricht zumindest eine eindeutige Clientkennung (CK) umfasst und Informationen darüber enthält, welche Business-Objekte von den Business-Objekt-Servern gelesen werden sollen,
- Mittel aufweist, die angepasst sind, anhand der Clientkennung zu ermitteln, auf welche Offices und auf welche Business-Objekte der Offices die Clienteinrichtung zugreifen darf,
- eine Anzahl von Adapter (A1, A2, Ak) aufweist, wobei das zentrale Serversystem angepasst ist, für jedes Business-Objekt, auf das die Clienteinrichtung zugreifen darf, Zugriffsinstruktionen (ZI) zu erzeugen, die unabhängig von der konkreten Definition der Business-Objekt-Klassen in einer standardisierten Form definiert werden, und einen Adapter aus der Anzahl von Adaptern auszuwählen und dem jeweiligen Adapter die Zugriffsinstruktionen (ZI) zu übermitteln, wobei jeder Adapter angepasst ist, die Zugriffsinstruktionen in konkrete Abfragen zu übersetzen und die konkreten Abfragen auszuführen, um die Business-Objekte von dem jeweiligen Business-Objekt-Server zu lesen und die gelesenen Business-Objekte zum Übertragen auf die Clienteinrichtung bereitzustellen, und
- einen Transformations-Service (TS) umfasst, wobei der Transformations-Service angepasst ist, nach dem Lesen der Business-Objekte von den Business-Objekt-Servern die gelesenen Business-Objekte von einer Serverdatenstruktur in eine Clientdatenstruktur anhand vorbestimmter Transformationsregeln zu transformieren, um die gelesenen Business-Objekte zu harmonisieren.

7. System nach Anspruch 6, weiter umfassend eine Datenbank (DB), die operativ mit dem zentralen Serversystem gekoppelt ist, wobei in der Datenbank
- eine erste Relation gespeichert ist, mit der eine Clientkennung (CK) zumindest einer Officekennung (OID) zugeordnet ist, wobei die Officekennung ein Office in den Business-Objekt-Servern eindeutig identifiziert,
- eine zweite Relation gespeichert ist, mit der eine Officekennung (OID) einem Business-Objekt-Server (BOS1, BOS2, BOSk) zugeordnet ist, und
- eine dritte Relation gespeichert ist, mit der einem Tupel aus einer Officekennung (OID) und einer Objektkennung (OK) zumindest ein Tupel aus einem Business-Objekt-Server und einem Adapter (A1, A2, Ak) zugeordnet ist,
wobei das zentrale Serversystem angepasst ist anhand der ersten und zweiten Relation zu ermitteln, auf welche Business-Objekt-Server die Clienteinrichtung zugreifen darf, und anhand der dritten Relation einen Adapter auszuwählen und dem ausgewählten Adapter die Zugriffsinstruktionen (ZI) zum Lesen der Business-Objekte zu übermitteln.

8. System nach Anspruch 6 oder 7, wobei das zentrale Serversystem ein Sicherheitsmodul (SM) umfasst, welches angepasst ist, anhand der Clientkennung (CK) zu ermitteln, auf welche Offices und auf welche Business-Objekte der Offices die Clienteinrichtung zugreifen darf.

## Claims

1. A method for data access by a client device in a distributed network system having a central server system (ZS), at least one client device (C1, C2, Cn), and at least one business object server (BOS1, BOS2, BOSk), said at least one client device and said at least one business object server being coupled to the central server system via a communications network, a number of business objects (BO1-BOk) being stored in the at least one business object server, **characterised in that**
- each business object server comprises a number of offices, each business object in the respective business object server being associated with one office (O1; O2; Om),
- the central server system (ZS) receives an access request message (ZA) by the client device, said access request message comprising at least one unique client identifier (CK) and including information as to which business objects are to be read from the business object servers,
- the central server system (ZS) uses said client identifier to determine at least one access permission, an access permission indicating the offices and the business objects of said offices which the client device is entitled to access,
- the central server system (ZS), once it has determined the offices in which the requested business objects are stored, generates access instructions (ZI) for the business objects permitted to be accessed by the client device, which are defined in a standardised manner, disregarding the specific definition of the business object classes, the business objects of the respective office in the respective business object server being read, and transmitted to the client device, on the basis of said access instructions, said access instructions being translated into specific requests that are adapted to access the respective business object servers, and
- the central server system (ZS) harmonises the business objects prior to their transmission to the client device, said central server system comprising a transformation service (TS) for harmonising the read business objects, said transformation service, subsequent to the reading of the business objects, transforms the business objects by changing their structure from a server data structure to a client data structure and prepares these transformed business objects for transmittal to the client device, said transformation of the business objects from the server data structure to the client data structure being performed according to predetermined transformation rules, with each of said transformation rules indicating which data field of the server data structure is transformed into which data fields of the client data structure.

2. The method as claimed in claim 1, wherein in the central server system (ZS)
- in a first relation, the client identifier (CK) is associated with at least one office identifier (OID), said office identifier uniquely identifying an office in the business object servers,
- in a second relation, an office identifier (OID) is associated with a business object server, and
- in a third relation, at least one tuple consisting of a business object server and an adaptor (A1, A2, Ak) is associated with a tuple consisting of an office identifier (OID) and an object identifier (OK),
wherein said relations are stored in a database (DB) which is operatively coupled to the central server system, said central server system using the first and second relations to determine the business object servers which the client device is entitled to access, said central server system using the third relation to select an adaptor and transmitting the access instructions (ZI) for reading the business objects to the selected adaptor.

3. The method as claimed in any of the preceding claims, wherein the access instructions (ZI) comprise at least the client identifier (CK).

4. The method as claimed in any one of claims 2 or 3, wherein the access instructions (ZI) are translated into the specific requests by the respective adaptor and wherein the respective adaptors execute said specific requests or access the respective business object servers using said specific requests, such specific requests comprising at least one of database requests, function calls, Web service invocations, and any combination thereof.

5. The method as claimed in any of the preceding claims, wherein the central server system comprises a security module (SM) which determines the access permissions, said access permissions being stored in the central server system and/or in the business object servers.

6. A system for data access by a client device said system comprising at least one central server system (ZS), said central server system being couplable via a communications network to at least one client device (C1, C2, Cn) and to at least one business object server (BOS1, BOS2, BOSk), a number of business objects being stored in the at least one business object server, each business object server comprising a number of offices, each business object in the respective business object server being associated with one office (O1, O2, On), and the central server system including
- means for receiving an access request message (ZA) by the client device, said access request message comprising at least one unique client identifier (CK) and including information as to which business objects are to be read from the business object servers,
- means that are adapted to use the client identifier to determine the offices and the business objects of said offices which the client device is entitled to access,
- a number of adaptors (A1, A2, Ak), the central server system being adapted to generate, for each business object the client device is entitled to access, access instructions (ZI) which are defined in a standardised manner, disregarding the specific definition of the business object classes, and to select an adaptor from among the number of adaptors and to transmit the access instructions (ZI) to the respective adaptor, each adaptor being adapted to translate the access instructions into specific requests and to execute said specific requests in order to read the business objects from the respective business object server and to prepare the read business objects for transmittal to the client device, and
- a transformation service (TS), said transformation service being adapted, subsequent to the reading of the business objects from the business object servers, to transform the read business objects from a server data structure to a client data structure on the basis of predetermined transformation rules in order to harmonise the read business objects.

7. The system as claimed in claim 6, further comprising a database (DB) which is operatively coupled to the central server system, said database having stored therein
- a first relation by means of which a client identifier (CK) is associated with at least one office identifier (OID), said office identifier uniquely identifying an office in the business object servers,
- a second relation by means of which an office identifier (OID) is associated with a business object server (BOS1, BOS2, BOSk), and
- a third relation by means of which at least one tuple consisting of a business object server and an adaptor (A1, A2, Ak) is associated with a tuple consisting of an office identifier (OID) and an object identifier (OK),
wherein the central server system is adapted to use the first and second relations to determine the business object servers which the client device is entitled to access and to use the third relation to select an adaptor and to transmit the access instructions (ZI) for reading the business objects to the selected adaptor.

8. The system as claimed in claim 6 or 7, wherein the central server system comprises a security module (SM) which is adapted to use the client identifier (CK) to determine the offices and the business objects of said offices which the client device is entitled to access.

## Revendications

1. Procédé d'accès à des données par un dispositif client dans un système de réseau distribué pourvu d'un système serveur central (ZS), d'au moins un dispositif client (C1, C2, Cn) et d'au moins un serveur objet métier (BOS1, BOS2, BOSk), ledit au moins un dispositif client et ledit au moins un serveur objet métier étant couplés au système serveur central via un réseau de communication, un nombre donné d'objets métier (BO1 - BOk) étant stocké dans ledit au moins un serveur objet métier, **caractérisé en ce que**
- chaque serveur objet métier comprend un nombre donné de bureaux, chaque objet métier dans le serveur objet métier respectif étant affecté à un bureau (O1; O2; Om),
- le système serveur central (ZS) reçoit du dispositif client un message de demande d'accès (ZA), le message de demande d'accès comprenant au moins un identifiant client univoque (CK) et contenant des informations qui indiquent quels sont les objets métier des serveurs objet métier qui doivent être lus,
- le système serveur central (ZS) détermine grâce à l'identifiant client au moins une autorisation d'accès, une autorisation d'accès indiquant les bureaux et les objets métier desdits bureaux auxquels le dispositif client a l'autorisation d'accès,
- après avoir déterminé dans quels bureaux les objets métier demandés sont stockés, le système serveur central (ZS) génère, pour les objets métier auxquels le dispositif client a l'autorisation d'accès, des instructions d'accès (ZI) qui sont définies dans une forme standardisée, et ce indépendamment de la définition concrète des classes objets métier, les objets métier du bureau respectif présents dans le serveur objet métier respectif étant lus grâce aux instructions d'accès et étant transmis au dispositif client, les instructions d'accès étant traduites en requêtes concrètes, lesquelles sont conçues de manière à avoir accès aux serveurs objet métier respectifs, et
- le système serveur central (ZS) harmonise les objets métier avant leur transmission au dispositif client, le système serveur central comprenant un service de transformation (TS) destiné à harmoniser les objets métier lus, le service de transformation transformant, après la lecture des objets métier, lesdits objets métier en les faisant passer d'une structure de données serveur en une structure de données client, et mettant à disposition les objets métier ainsi transformés en vue de leur transmission au dispositif client, la transformation des objets métier, à savoir la transformation de la structure de données serveur en une structure de données client, étant réalisée grâce à des règles de transformation prédéterminées et chacune des règles de transformation indiquant quel champ de données de la structure de données serveur est transformé en quels champs de données de la structure de données client.

2. Procédé selon la revendication 1, lors duquel dans le système serveur central (ZS),
- l'identifiant client (CK) est affecté, dans une première relation, à au moins un identifiant bureau (OID), l'identifiant bureau identifiant de manière univoque un bureau dans les serveurs objet métier,
- un identifiant bureau (OID) est affecté, dans une deuxième relation, à un serveur objet métier, et
- au moins un n-uplet composé d'un serveur objet métier et d'un adaptateur (A1, A2, AK) est affecté, dans une troisième relation, à un n-uplet composé d'un identifiant bureau (OID) et d'un identifiant objet (OK),
lesdites relations étant stockées dans une banque de données (DB) qui est couplée de manière opérationnelle au système serveur central, le système serveur central déterminant, grâce à la première et à la deuxième relation, les serveurs objet métier auxquels le dispositif client a l'autorisation d'accès, le système serveur central sélectionnant un adaptateur grâce à la troisième relation et transmettant à l'adaptateur sélectionné les instructions d'accès (ZI) en vue de la lecture des objets métier.

3. Procédé selon l'une quelconque des revendications précédentes, lors duquel les instructions d'accès (ZI) comprennent au moins l'identifiant client (CK).

4. Procédé selon l'une des revendications 2 ou 3, lors duquel les instructions d'accès (ZI) sont traduites par l'adaptateur respectif en requêtes concrètes et lors duquel les adaptateurs respectifs exécutent les requêtes concrètes ou ont accès aux serveurs objet métier respectifs au moyen desdites requêtes concrètes, les requêtes concrètes comprenant au moins un des éléments suivants : des interrogations de base de données, des appels de fonction, des appels de service web ainsi qu'une combinaison desdits éléments.

5. Procédé selon l'une quelconque des revendications précédentes, lors duquel le système serveur central comprend un module de sécurité (SM) qui détermine les autorisations d'accès, les autorisations d'accès étant stockées dans le système serveur central et/ou dans les serveurs objet métier.

6. Système d'accès à des données par un dispositif client, dans lequel ledit système comprend au moins un système serveur central (ZS), le système serveur central pouvant être couplé à au moins un dispositif client (C1, C2, Cn) et à au moins un serveur objet métier (BOS1, BOS2, BOSk) via un réseau de communication, dans lequel un nombre donné d'objets métier est stocké dans ledit au moins un serveur objet métier, chaque serveur objet métier comprenant un nombre donné de bureaux, chaque objet métier stocké dans le serveur objet métier respectif étant affecté à un bureau (O1, O2, On), et dans lequel le système serveur central
- présente des moyens destinés à recevoir du dispositif client un message de demande d'accès (ZA), le message de demande d'accès comprenant au moins un identifiant client univoque (CK) et contenant des informations qui indiquent quels sont les objets métier des serveurs objet métier qui doivent être lus,
- présente des moyens qui sont conçus pour déterminer grâce à l'identifiant client les bureaux et les objets métier desdits bureaux auxquels le dispositif client a l'autorisation d'accès,
- présente un nombre donné d'adaptateurs (A1, A2, Ak), le système serveur central étant conçu pour générer pour chaque objet métier auquel le dispositif client a l'autorisation d'accès, des instructions d'accès (ZI) qui sont définies dans une forme standardisée, et ce indépendamment de la définition concrète des classes objet métier, et pour sélectionner un adaptateur parmi le nombre donné d'adaptateurs et pour transmettre lesdites instructions d'accès (ZI) à l'adaptateur respectif, chaque adaptateur étant conçu pour traduire les instructions d'accès en requêtes concrètes et pour exécuter lesdites requêtes concrètes afin de lire les objets métier du serveur objet métier respectif et de mettre à disposition les objets métier lus en vue de leur transmission au dispositif client, et
- comprend un service de transformation (TS), le service de transformation étant conçu pour transformer, après la lecture des objets métier des serveurs objet métier, les objets métier lus, et ce en transformant une structure de données serveur en une structure de données client grâce à des règles de transformation prédéterminées afin d'harmoniser lesdits objets métier lus.

7. Système selon la revendication 6, lequel comprend en outre une banque de données (DB) qui est couplée de manière opérationnelle au système serveur central et dans laquelle banque de données est stockée
- une première relation grâce à laquelle un identifiant client (CK) est affecté à au moins un identifiant bureau (OID), l'identifiant bureau identifiant de manière univoque un bureau dans les serveurs objet métier,
- une deuxième relation grâce à laquelle un identifiant bureau (OID) est affecté à un serveur objet métier (BOS1, BOS2, BOSk), et
- une troisième relation grâce à laquelle au moins un n-uplet composé d'un serveur objet métier et d'un adaptateur (A1, A2, Ak) est affecté à un n-uplet composé d'un identifiant bureau (OID) et d'un identifiant objet (OK),
le système serveur central étant conçu pour déterminer, grâce à la première et à la deuxième relation, les serveurs objet métier auxquels le dispositif client a l'autorisation d'accès et pour sélectionner, grâce à la troisième relation, un adaptateur et pour transmettre à l'adaptateur sélectionné les instructions d'accès (ZI) en vue de la lecture des objets métier.

8. Système selon la revendication 6 ou 7, dans lequel le système serveur central comprend un module de sécurité (SM) qui est conçu pour déterminer, grâce à l'identifiant client (CK), les bureaux et les objets métier desdits bureaux auxquels le dispositif client a l'autorisation d'accès.
